# EUROPÄISCHE PATENTSCHRIFT

(11) **EP 2 201 269 B1**
(45) Veröffentlichungstag und Bekanntmachung des Hinweises auf die Patenterteilung: **16.11.2011**
(21) Anmeldenummer: 08802033.4
(22) Anmeldetag: 11.09.2008
(51) Int. Cl.: F16H 61/12, F16H 61/688, F16H 61/16

(54) **FEHLERERKENNUNGSVERFAHREN FÜR KRAFTFAHRZEUGGETRIEBE**
FAULT DETECTION METHOD FOR MOTOR VEHICLE TRANSMISSIONS
PROCÉDÉ DE DÉTECTION D'ERREUR POUR BOÎTE DE VITESSES DE VÉHICULE AUTOMOBILE

(30) Priorität: 17.10.2007 DE 102007051064
(43) Veröffentlichungstag der Anmeldung: 30.06.2010
(73) Patentinhaber: GETRAG Getriebe- und Zahnradfabrik Hermann Hagenmeyer GmbH & Cie KG, 74199 Untergruppenbach (DE)
(72) Erfinder: SEUFERT, Martin, 71711 Steinheim (DE); HETTICH, Ralf, 70794 Filderstadt (DE); GLATTHAAR, Josef, 78727 Oberndorf (DE); RICHTER, Ralph, 78112 St. Georgen (DE); KALISCH, Tobias, 78050 Villingen-Schwenningen (DE); BRYZGALSKI, Marius, 78112 St. Georgen (DE); MOELLMANN, Joerg, 80639 München (DE)
(74) Vertreter: Witte, Weller & Partner
(86) Internationale Anmeldenummer: PCT/EP2008/007473
(87) Internationale Veröffentlichungsnummer: WO 2009/049727

(56) Entgegenhaltungen:
- EP-A- 1 610 023
- WO-A-2005/080830
- DE-A1- 10 160 308
- DE-A1- 10 308 713

## Beschreibung

Die vorliegende Erfindung betrifft ein Verfahren zum Erkennen eines Fehlerzustandes in einem automatisierten Kraftfahrzeuggetriebe.

Ein solches Fehlererkennungsverfahren kann insbesondere auf dem Gebiet der Doppelkupplungsgetriebe Anwendung finden.

Doppelkupplungsgetriebe weisen zwei parallele Teilgetriebe (Zweige) auf, denen jeweils eine eigene Reibkupplung (trocken- oder nasslaufend) zugeordnet ist.

Die Eingangsglieder der Reibkupplungen sind mit einer Antriebseinheit verbunden, wie bspw. einem Verbrennungsmotor. Die Antriebseinheit kann jedoch auch ein Elektromotor oder eine Hybridantriebseinheit sein.

Dem einen Teilgetriebe sind die ungeraden Gangstufen (1, 3, 5, ...) zugeordnet. Dem anderen Teilgetriebe sind die geraden Gangstufen (2, 4, 6, ...) zugeordnet.

Die Übertragung von Antriebsleistung von der Antriebseinheit auf angetriebene Räder eines Kraftfahrzeuges erfolgt generell über eines der zwei Teilgetriebe. In dem jeweils nicht aktiven Teilgetriebe ist in der Regel eine Gangstufe vorgewählt. Ein Gangwechsel von dem Startgang des aktiven Teilgetriebes zu dem Zielgang des nicht aktiven Getriebes kann dann durch überschneidende Betätigung der eingangsseitigen Reibkupplungen erfolgen. Diese überschneidende Betätigung kann dabei so durchgeführt werden, dass keine Zugkraftunterbrechung während des Gangwechsels auftritt.

Das entsprechende Ansteuern der Reibkupplungen und das Ein- und Auslegen von Gangstufen erfolgen In der Regel automatisiert, mittels einer übergeordneten Steuereinheit. Diese Steuereinheit kann ferner mit einer Steuereinheit für die Antriebseinheit verbunden sein, Dabei versteht sich, dass die Steuereinheit das über die jeweiligen Reibkupplungen übertragene Drehmoment und die in den jeweiligen Teilgetrieben eingestellten Übersetzungen so wählt, dass diese an die aktuelle Fahrsituation (Geschwindigkeit des Fahrzeugs, Zug- oder Schubbetrieb, etc.) angepasst sind.

Derartige Doppelkupplungsgetriebe und ihre Funktion sind allgemein bekannt.

Aus dem Dokument WO 2005/080830 A welches den nachst liegenden Stand der Tecknik darstellt, ist ein Verfahren zur Betätigung mindestens zweier parallel im Antriebsstrang eines Kraftfahrzeugs Drehmoment-übertragenden Kupplungen bekannt, wobei während eines Anfahrvorganges Drehzahlen in dem Antriebsstrang überwacht werden.

Ferner offenbart das Dokument EP 1 610 023 A1 ein Getriebe mit einer Doppelkupplungsanordnung, wobei Schlupferfassungsmittel vorgesehen sind sowie Mittel zum Steuern einer Kupplung in Abhängigkeit von dem Schlupf.

Aus dem Dokument DE 101 60 308 A1 ist ein Verfahren zum Betrieb eines Doppelkupplungsgetriebes bekannt, wobei verschiedene Schaltabläufe einschließlich einer Schubhochschaltung und einer Schubrückschaltung erläutert sind. Dabei soll die Summe der Momente, die von den beiden Kupplungen auf die Getriebeeingangswellen übertragen wird, konstant gleich dem gewählten Motormoment sein.

Schließlich ist ein Doppelkupplungsgetriebe und ein Verfahren zu dessen Betreiben aus dem Dokument DE 103 08 713 A1 bekannt.

Bei automatisierten Krahfahrzeuggetrieben ist eine erhöhte Anforderung an die Sicherheit zu stellen.

Es ist daher die Aufgabe der vorliegenden Erfindung, ein Verfahren zum Erkennen eines Fehlerzustandes in einem automatisierten Kraftfahrzeuggetriebe anzugeben.

Die obige Aufgabe wird durch ein Verfahren zum Erkennen eines Fehlerzustandes mit den Merkmalen des Anspruchs 1 gelöst.

Die vorliegende Erfindung betrifft ein Verfahren zum Erkennen eines Fehlerzustandes in einem automatisierten Kraftfahrzeuggetriebe, bei dem Antriebsmoment über einen ersten und einen zweiten parallelen Zweig auf wenigstens ein angetriebenes Rad übertragen werden kann, wobei in jedem Zweig eine Kupplung vorgesehen ist, mit den Schritten:
- Erfassen des über die erste Kupplung übertragenen Drehmomentes;
- Erfassen des über die zweite Kupplung übertragenen Drehmomentes;
- Erfassen, ob in beiden Zweigen ein Gang eingelegt ist; und
- Feststellen eines Fehlerzustandes, wenn in beiden Zweigen ein Gang eingelegt ist und wenn eine Summe der über die erste und die zweite Kupplung übertragenen Drehmomente größer ist als ein bestimmter Referenzwert.

Das Verfahren gemäß der vorliegenden Erfindung geht von dem Grundgedanken aus, dass die Summe der über die zwei Zweige des Kraftfahrzeuggetriebes übertragenen Drehmomente einen bestimmten jeweiligen Wert nicht überschreiten darf. Dieser bestimmte Wert (Referenzwert) kann dabei eine feste Größe sein, kann jedoch auch eine variable Größe sein, die von verschiedenen Parametern abhängt. Eine Anwendung bei Allrad-Fahrzeugen ist ohne weiteres möglich.

Der Begriff des Referenzwertes soll vorliegend daher allgemein verstanden werden, entweder als fester Wert, als variabler Wert, als Kennlinie oder Kennfeld.

Durch das erfindungsgemäße Verfahren kann insbesondere ein Zustand erfasst werden, der zu einer verzögerten Antriebsachse führt, wenn also die angetriebene Achse (das angetriebene Rad) langsamer dreht als die nicht angetriebene Achse (das nicht angetriebene Rad). Dies kann bspw. ein Fehlerzustand sein, der dadurch hervorgerufen wird, dass über die beiden Kupplungen zu viel Drehmoment für eine eingerichtete Übersetzung übertragen wird. Ein solcher Fehlerzustand kann ggf. zu einer Instabilität des Kraftfahrzeuges führen. Dies gilt insbesondere, jedoch nicht ausschließlich, für das Fahren auf Fahrbahnen mit einem verringerten Reibwert.

Mit dem erfindungsgemäßen Verfahren kann also insbesondere ein Fehlerzustand in Form eines Verspannungszustandes des Antriebsstranges erkannt und durch geeignete Maßnahmen bereinigt werden. Ein solcher Verspannungszustand kann insbesondere bei einem Gangwechsel auftreten, während der Leistungsfluss von dem einen parallelen Zweig auf den anderen parallelen Zweig übertragen wird. Dies ist insbesondere bei Doppelkupplungsgetrieben relevant, bei denen ein solcher Übergang des Leistungsflusses unter Last erfolgt. In ähnlicher Weise lassen sich die erfindungsgemäßen Verfahren jedoch auch auf Wandlerautomatgetriebe anwenden, bei denen ebenfalls zwei parallele Zweige unter Last geschaltet werden können (beispielsweise eine Kupplung für einen ersten und eine Kupplung für einen zweiten Gang). Ferner sind die erfindungsgemäßen Verfahren auch bei automatisierten Schaltgetrieben (ASG bzw. AMT) anwendbar, insbesondere, wenn die dort verwendeten Schaltkupplungen dazu ausgelegt sind, Gangwechsel überschneidend unter Last auszuführen. Mit anderen Worten kann ein solcher Verspannungszustand bei einem Gangwechsel dann auftreten, wenn eine Kupplung eines Quellganges zu spät geöffnet und/oder eine Kupplung eines Zielganges zu früh eingelegt wird. Ein solcher Verspannungszustand kann dabei im Grunde unter allen Fahrzuständen auftreten. Besonders relevant wird dies, wenn durch den Verspannungszustand die Antriebsachse verzögert wird. Demzufolge sind die erfindungsgemäßen Verfahren insbesondere dann von besonderer Bedeutung, wenn das Fahrzeug sich bereits in einem Schubzustand befindet, wenn also beispielsweise eine Rückschaltung im Schubbetrieb stattfindet. Die hierbei auftretende Verzögerung der Antriebsachse kann dabei so groß sein, dass der Kraftschluss zwischen angetriebenem Rad und Fahrbahnoberfläche verloren geht. Besonders problematisch kann dies natürlich auf Fahrbahnen mit geringem Reibwert sein. Ferner ist das erfindungsgemäße Verfahren auf Fahrzeuge mit Vorder-, Hinter- und Allradantrieb anwendbar. Inbesondere bei der Anwendung auf Fahrzeuge mit Hinterradantrieb ist es problematisch, dass die Stabilität des Fahrzeugs leidet, wenn der Kraftschluss an der Hinterachse verloren geht.

Das erfindungsgemäße Verfahren ist dazu aufgelegt, einen solchen Verspannungszustand rechtzeitig zu erkennen, um dann geeignete Maßnahmen treffen zu können, wie beispielsweise das wenigstens teilweise Öffnen von wenigstens einer der zwei Kupplungen (oder das sonstige Trennen der parallelen Zweige, bspw. durch Auslegen von Gängen oder Ähnliches).

Bei dem erfindungsgemäßen Fehlererkennungsverfahren der vorliegenden Erfindung Ist es von besonderem Vorteil, wenn der Fehlerzustand unter der zusätzlichen Bedingung festgestellt wird, dass die Absolutwertsumme aus einem Absolutwert des über die erste Kupplung übertragenen Drehmomentes und einem Absolutwert des über die zweite Kupplung übertragenen Drehmomentes größer ist als ein Referenzwert.

Da die über die Kupplungen übertragenen Drehmomente generell vorzeichenbehaftet sein können, wird durch die Absolutwertbildung eine höhere Fehlererkennungssicherheit realisiert. Mit anderen Worten kann ein Fehlerzustand auch dann festgestellt werden, wenn das über die eine Kupplung übertragene Drehmoment positiv und das über die andere Kupplung übertragene Drehmoment negativ ist.

Im Rahmen der vorliegenden Erfindung soll sich das Vorzeichen des über eine jeweilige Kupplung übertragenen Drehmomentes errechnen, indem man die Drehzahlen von Eingangsglied und Ausgangsglied der entsprechenden Kupplung vergleicht. Ein positives Vorzeichen ergibt sich, wenn die Drehzahl des Eingangsgliedes größer ist als die Drehzahl des Ausgangsgliedes. Dies gilt bspw. dann, wenn die Drehzahl der Antriebseinheit größer ist als die Antriebswellendrehzahl eines in dem jeweiligen Zweig vorhandenen Teilgetriebes. In entsprechender Weise ergibt sich ein negatives Vorzeichen des über die Kupplung übertragenen Drehmomentes, wenn die Drehzahl des Eingangsgliedes kleiner ist als die Drehzahl des Ausgangsgliedes der jeweiligen Kupplung.

Von besonderem Vorteil ist es, wenn der Referenzwert eine Funktion des Wunschdrehmomentes ist, das von einem Fahrer des Kraftfahrzeuges angefordert ist.

Das von dem Fahrer angeforderte Wunschdrehmoment ergibt sich bei einem Verbrennungsmotor bspw. durch die jeweilige Stellung einer Drosselklappe, bei elektrischen Antriebseinheiten bspw. aufgrund des elektrischen Motorstromes. Ferner kann das Wunschdrehmoment ggf. auch aus anderen Zuständen des Fahrzeuges und/oder der Gaspedalstellung abgeleitet werden. Die Art der Erkennung des Wunschdrehmomentes ist im vorliegenden Zusammenhang beliebig.

Durch die Maßnahme, die Erkennung eines Fehlerzustandes davon abhängig zu machen, welches Drehmoment von einem Fahrer des Kraftfahrzeuges angefordert ist, kann die Fehlerzustandserkennung sicherer bzw. adaptiver durchgeführt werden.

Gemäß einer weiteren Ausführungsform wird der Referenzwert gebildet durch den Absolutwert der Summe aus dem Fahrerwunschmoment und einem Schwellenwert.

Hierdurch kann ein gewisser Sicherheitsbereich realisiert werden.

Es ist alternativ oder zusätzlich auch möglich, den Referenzwert zu bilden durch das Ergebnis einer Multiplikation eines Absolutwertes einer Summe, die aus dem Fahrerwunschmoment und einem Schwellenwert gebildet wird, mit einem Faktor.

Durch diese Maßnahme kann eine noch höhere Sicherheit erzielt werden.

Ferner ist es alternativ oder akkumulativ möglich, dass der Referenzwert gebildet wird durch die Summe aus dem Ergebnis einer Multiplikation eines Absolutwertes des Fahrerwunschmomentes mit einem Faktor und aus einem Absolutwert eines Schwellenwertes.

Durch die Absolutwertbildung kann wiederum ein höherer Sicherheitsbereich eingestellt werden.

Ferner ist es alternativ möglich, dass der Referenzwert ein von dem Fahrerwunschmoment unabhängiger Wert ist, der, wie oben erwähnt, ein fester Wert, ein variabler Wert, eine Kennlinie oder ein Kennfeld sein kann (in Abhängigkeit von bspw. Fahrzeugzuständen).

Gemäß einer weiteren alternativen Ausführungsform wird der Fehlerzustand unter der zusätzlichen Bedingung festgestellt, dass ein an dem angetriebenen Rad resultierendes negatives Abtriebsmoment nicht größer wird als ein bestimmter Wert.

Bei dieser Ausführungsform des Verfahrens gemäß der vorliegenden Erfindung können insbesondere die vorzeichenbehafteten Drehmomente eingehen, die von den Kupplungen übertragen werden.

Bei einer ersten Ausführungsform wird der Fehlerzustand dabei unter der zusätzlichen Bedingung festgestellt, dass beide Kupplungen sich in einem schlupfenden Zustand befinden.

Bei dieser Ausführungsform ist es besonders bevorzugt, wenn der Fehlerzustand unter der zusätzlichen Bedingung festgestellt wird, dass die Summe aus (1) einem über die erste Kupplung übertragenen, vorzeichenbehafteten Drehmomente, multipliziert mit dem in dem zugeordneten Zweig eingerichteten Übersetzungsverhältnis, und aus (ii) einem über die zweite Kupplung übertragenen, vorzeichenbehafteten Drehmoment, multipliziert mit dem in dem zugeordneten Zweig eingerichteten Übersetzungsverhältnis, kleiner ist als ein Referenzwert, der der negative Absolutwert des Ergebnisses einer Multiplikation der (i) Summe aus dem Fahrerwunschmoment und aus einem Schwellenwert mit dem (ii) niedrigeren der Übersetzungsverhältnisse ist.

Bei dieser Ausführungsform wird, wie gesagt, davon ausgegangen, dass beide Kupplungen sich in einem schlupfenden Zustand befinden. Die Erkennung des Fehlerzustandes wird von den vorzeichenbehafteten Drehmomenten abhängig gemacht, die über die jeweiligen Kupplungen übertragen werden.

Gemäß einer weiteren Ausführungsform der vorliegenden Erfindung wird der Fehlerzustand unter der zusätzlichen Bedingung festgestellt, dass nur eine der beiden Kupplungen sich in einem schlupfenden Zustand befindet.

Es versteht sich dabei, dass die andere Kupplung vorzugsweise in einem vollständig geschlossenen Zustand ist.

Bei dieser Ausführungsform ist es bevorzugt, wenn der Fehlerzustand unter der zusätzlichen Bedingung festgestellt wird, dass die Summe aus (i) dem Ergebnis einer Multiplikation eines von der Antriebseinheit bereitgestellten Drehmomentes mit dem Übersetzungsverhältnis, das in dem Zweig eingerichtet ist, der der nicht schlupfenden Kupplung zugeordnet ist, und aus (ii) dem Ergebnis einer Multiplikation eines über die schlupfende Kupplung übertragenen, vorzeichenbehafteten Drehmomentes mit der Differenz aus der Übersetzung, die in dem Zweig eingerichtet ist, der der schlupfenden Kupplung zugeordnet ist, und der Übersetzung, die in dem Zweig eingerichtet ist, der der nicht schlupfenden Kupplung zugeordnet ist, kleiner ist als ein Referenzwert, der der negative Absolutwert des Ergebnisses einer Multiplikation der (i) Summe aus dem Fahrerwunschmoment und einem Schwellenwert mit dem (ii) niedrigeren der Übersetzungsverhältnisse ist.

Bei dieser Ausführungsform kann die Aufsummierung der über die Kupplungen übertragenen Drehmomente hinsichtlich der nicht schlupfenden Kupplung auf einfache Weise aus dem Motormoment berechnet werden.

Insgesamt ist es ferner bevorzugt, wenn vor Feststellung des Fehlerzustandes wenigstens ein weiterer Zustand des Kraftfahrzeuges geprüft wird, um fehlerhafte Feststellungen eines Fehlerzustandes zu vermeiden.

Mit anderen Worten können vorab weitere Eingangsbedingungen abgeprüft werden, bspw. ein Bremssignal, ein Bremsdruck, ein Lenkwinkel, ein Drehzahlgradient, und/oder eine Getriebeeingangswellendrehzahl, etc.

Insgesamt ist es ferner bevorzugt, wenn die Kupplung eine Reibkupplung ist.

Generell kann das erfindungsgemäße Verfahren zwar auch bei reinen Schaltkupplungen angewendet werden, besonders bevorzugt wird das erfindungsgemäße Verfahren jedoch bei Reibkupplungen angewendet, die in einem schlupfenden Zustand angesteuert werden können.

Bei dem erfindungsgemäßen Verfahren Ist es bevorzugt, wenn ein Fehlerzustand dann festgestellt wird, wenn der Fehlerzustand für eine vorbestimmte Zeitspanne größer Null vorliegt.

Hierdurch kann vermieden werden, dass ein Fehlerzustand versehentlich festgestellt wird, bspw. aufgrund von sehr kurzzeitig auftretenden Maximal- bzw. Minimalwerten der Drehzahlen.

Es versteht sich, dass das erfindungsgemäße Verfahren insbesondere anwendbar ist bei Doppelkupplungsgetrieben. Generell ist jedoch die Anwendung des erfindungsgemäßen Verfahrens auch bei anderen Arten von Kraftfahrzeuggetrieben möglich, wie bspw. bei Wandlerautomatgetrieben oder auch bei automatisierten Schaltgetrieben (ASG bzw. AMT).

Das von einer Kupplung übertragene Drehmoment kann aus direkten oder indirekten Aktuatorgrößen abgeleitet werden (bspw. aus dem Sollstrom eines Elektromotors oder eines Ventils, aus dem Ist-Strom eines Elektromotors oder eines Ventils, aus dem Kupplungsdruck, etc).

Ferner ist es denkbar, unterschiedliche Verfahren so zu kombinieren, dass sie in verschiedenen Phasen eines Schaltzustandes oder eines Verspannungszustandes angewendet werden (bspw. eine Kupplung schlupft, eine Kupplung haftet, beide Kupplungen haften, etc).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, welcher durch die vorliegenden Ansprüche bestiment wird, zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines Kraftfahrzeuggetriebes in Form eines Doppelkupplungsgetriebes, auf das das erfindungsgemäße Verfahren anwendbar ist;
- Fig. 2: ein Ablaufdiagramm eines nicht erfindungsgemaβen Verfahrens
- Fig. 2a: eine Modifikation des in Fig. 2 gezeigten Verfahrens ;
- Fig. 3: ein Ablaufdiagramm einer bevorzugten Ausführungsform eines Verfahrens gemäß der vorliegenden Erfindung;
- Fig. 4: eine Modifikation des Verfahrens der Fig. 3;
- Fig. 5: eine Modifikation des Verfahrens der Fig. 3;
- Fig. 6: eine Modifikation des Verfahrens der Fig. 3; und
- Fig. 7: ein Ablaufdiagramm einer weiteren bevorzugten Ausführungsform eines Verfahrens gemäß der vorliegenden Erfindung.

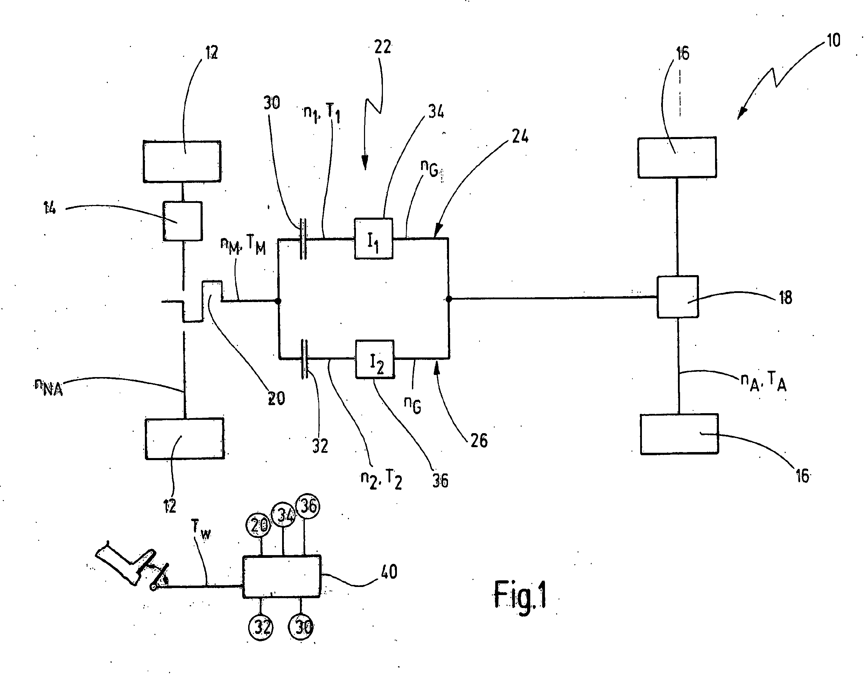

In Fig. 1 ist ein Kraftfahrzeug in schematischer Form dargestellt und mit 10 bezeichnet. Das Kraftfahrzeug 10 ist bspw. ein Personenkraftwagen, der eine nicht angetriebene Achse mit nicht angetriebenen Rädern 12 aufweist. Bei einem Allrad-Fahrzeug können die Räder 12 auch angetriebene Räder sein, die über ein Ausgleichsgetriebe bzw. Differential 14 miteinander verbunden sind. Ferner weist das Kraftfahrzeug 10 eine angetriebene Achse mit angetriebenen Rädern 16 auf, die über ein Differential 18 miteinander verbunden sind. Das Kraftfahrzeug 10 weist einen Antriebsstrang mit einer Antriebseinheit 20 auf, die bspw. durch einen Verbrennungsmotor, einen Hybridmotor oder einen reinen Elektromotor gebildet sein kann. Der Antriebsstrang beinhaltet ferner ein Doppelkupplungsgetriebe 22. Das Doppelkupplungsgetriebe 22 weist in an sich bekannter Weise einen ersten Zweig 24 und einen zweiten Zweig 26 auf.

In dem ersten Zweig 24 ist eine erste Reibkupplung 30 vorgesehen. In dem zweiten Zweig 26 ist eine zweite Reibkupplung 32 vorgesehen. In dem ersten Zweig 24 ist ein erstes Teilgetriebe 34 vorhanden, und in dem zweiten Zweig 26 ist ein zweites Teilgetriebe 36 vorhanden.

Die Eingangsglieder der Reibkupplungen 30, 32 sind mit einer Ausgangswelle der Antriebseinheit 20 verbunden. Die Ausgangsglieder der Reibkupplungen 30, 32 sind mit den jeweiligen Teilgetrieben 34, 36 verbunden. Die Teilgetriebe 34, 36 können als Stirnradgetriebe mit mehreren Gangstufen ausgebildet sein. In dem ersten Teilgetriebe 34 wird eine erste Übersetzung I₁, eingerichtet. In dem zweiten Teilgetriebe 36 wird eine zweite Übersetzung I₂ eingerichtet.

Die Ausgangsglieder der Teilgetriebe 34, 36 sind mit dem Differential 18 der angetriebenen Achse verbunden, bspw. über eine Kardanwelle.

Obgleich die Darstellung in Fig. 1 schematisch einem heckangetriebenen Fahrzeug mit einer Antriebseinheit in Längsbauweise ähnelt, versteht sich, dass diese Darstellung rein beispielhaft sein soll. Die nachstehend beschriebenen erfindungsgemäßen Verfahren sind in gleichem Maße auf Fahrzeuge mit Frontantrieb anwendbar, mit einer Antriebseinheit in Frontquer-Bauweise, auf Mittelmotorfahrzeuge, Heckmotorfahrzeuge, etc. Ferner sind die Verfahren gemäß der Erfindung auch auf allradgetriebene Fahrzeuge anwendbar.

In Fig. 1 ist ferner eine Steuereinheit 40 gezeigt, die mit der Antriebseinheit 20, den Reibkupplungen 30, 32 und den Teilgetrieben 34, 36 verbunden ist. Dabei ist die Steuereinheit 40 dazu ausgelegt, Messwerte aus den entsprechenden Einheiten zu erhalten und die entsprechenden Einheiten automatisiert anzusteuern.

Die Steuereinheit 40 empfängt ferner ein Wunschmoment T_{w}, das von einem Fahrer des Kraftfahrzeuges 10 angefordert wird.

Die Funktionsweise eines Antriebsstranges mit einem solchen Doppelkupplungsgetriebe 22 wurde bereits eingangs beschrieben. Nachstehend werden erfindungsgemäße Verfahren zum Festellen eines Fehlerzustandes in einem solchen Doppelkupplungsgetriebe 22 erläutert, wobei auf Drehzahlen und Drehmomente des Antriebsstranges abgestellt wird, die nachfolgend kurz erläutert werden.

Die Ausgangswelle der Antriebseinheit 20 dreht mit einer Drehzahl n_{M} und stellt ein Drehmoment T_{M} bereit. In entsprechender Weise ergeben sich am Ausgang der ersten Reibkupplung 30 bzw. dem Eingang des ersten Teilgetriebes 34 eine Drehzahl n₁ und ein Drehmoment T₁. Am Ausgang der zweiten Reibkupplung 32 bzw. am Eingang des zweiten Teilgetriebes 36 ergeben sich eine Drehzahl n₂ und ein Drehmoment T₂. An der angetriebenen Achse bzw. an einem angetriebenen Rad 16 ergeben sich eine Drehzahl n_{A} und ein Drehmoment T_{A}. Das Verhältnis der Drehzahlen n_{M} zu n_{A} hängt ab von der Übersetzung I des jeweils aktiven Teilgetriebes 34, 36 und von der Übersetzung des Differentials 18.

An der nicht angetriebenen Achse bzw. einem nicht angetriebenen Rad 12 ergibt sich eine Drehzahl n_{NA}.

Im Folgenden werden Ausführungsformen des erfindungsgemäßen Verfahrens in Form von Ablaufdiagrammen beschrieben. Dabei versteht sich, dass die Ablaufdiagramme bevorzugt als Prozesse innerhalb eines Prozessors der Steuereinheit 40 ablaufen und Zeit- oder Interrupt-gesteuert immer wieder neu gestartet werden (beispielsweise in Form einer Schleife, die alle 2. bis 50 Millisekunden neu gestartet wird). Sofern nachstehend davon die Rede ist, dass das Verfahren abgebrochen wird, ist gemeint, dass das jeweilige Teilverfahren abbricht, jedoch anschließend in dem eingerichtete Rhythmus wieder neu gestartet wird.

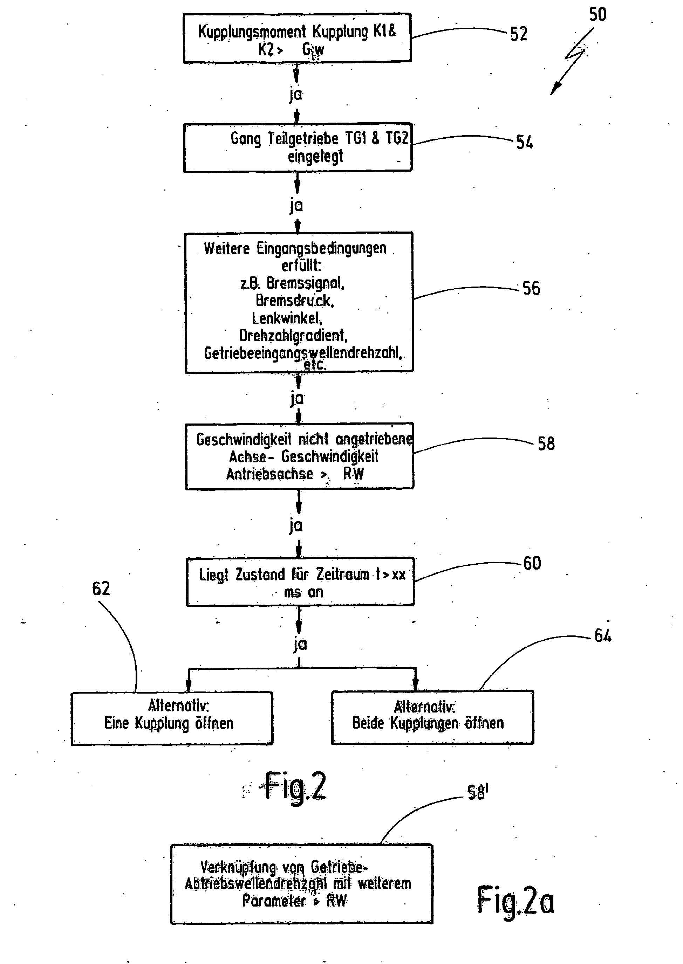

In Fig. 2 ist ein Ablaufdiagramm eines nich erfindungsgemäßen Verfahrens dargestellt und mit 50 bezeichnet.

In einem ersten Schritt .52 wird festgestellt, ob die über die erste Reibkupplung 30 (nachstehend auch mit K1 bezeichnet) und die zweite Reibkupplung 32 (nachstehend auch mit K2 bezeichnet) übertragenen Drehmomente T₁, T₂ größer sind als ein Grundwert GW. Der Grundwert GW kann dabei dem Eingriffspunkt bzw. Kiss point der jeweiligen Reibkupplungen entsprechen. Mit anderen Worten wird in dem Schritt 52 festgestellt, ob die Reibkupplungen 30, 32 dazu in der Lage sind, Drehmoment zu übertragen. Falls dies nicht der Fall ist, bricht das Verfahren ab. Falls diese Bedingung jedoch erfüllt ist, wird geprüft, ob in beiden Teilgetrieben 34, 36 (nachstehend auch mit TG1 bzw. TG2 bezeichnet) jeweils eine Gangstufe eingelegt ist (Schritt 54).

Wenn nur in einem oder keinem der Teilgetriebe 34, 36 eine Gangstufe eingelegt ist, bricht das Verfahren ab. Andernfalls wird in einem weiteren Schritt 56 geprüft, ob weitere Eingangsbedingungen erfüllt sind. Diese Eingangsbedingungen betreffen bspw. das Vorhandensein eines Bremssignals, die Höhe des Bremsdruckes, die Größe des Lenkwinkels, die Größe eines Drehzahlgradienten und/oder die Drehzahl n₁ bzw. n₂ der Eingangswelle des aktiven Teilgetriebes 34 bzw. 36.

In einem Schritt 58 wird abgefragt, ob die Differenz der Geschwindigkeit bzw. der Drehzahl n_{NA} der nicht angetriebenen Achse (bzw. des nicht angetriebenen Rades 12) und der Geschwindigkeit bzw. Drehzahl der angetriebenen Achse (bzw. des angetriebenen Rades 16) größer ist als ein Referenzwert (Schritt 58). Falls dies nicht der Fall ist, bricht das Verfahren ab.

Falls jedoch die Drehzahldifferenz größer ist als ein Referenzwert, der beispielsweise einem Schlupf an der angetriebenen Achse von 5 bis 70 %, vorzugsweise 20 bis 50 %, insbesondere 25 bis 35 % entsprechen kann, wird In einem Schritt 60 abgeprüft, ob dieser Zustand für einen bestimmten Zeitraum vorliegt bzw. anhält. Diese Zeit kann im Bereich von 25 bis 800 Millisekunden, insbesondere 50 bis 500 Millisekunden und bevorzugt im Bereich von 75 bis 250 Millisekunden (besonders bevorzugt im Bereich von 100 bis 200 Millisekunden) liegen.

Falls die Drehzahldifferenz nur für einen kürzeren Zeitraum über dem Referenzwert liegt, wird angenommen, dass es sich um einen nicht sicherheitsrelevanten kurzfristigen Übergangszustand bzw. einen Messfehler handeln kann. In diesem Fall wird das Verfahren abgebrochen. Falls die Drehzahldifferenz jedoch für den bestimmten Zeitraum vorliegt, wird entweder eine der zwei Reibkupplungen 30, 32 geöffnet (Schritt 62), oder es werden beide Reibkupplungen 30, 32 geöffnet (Schritt 64). Die Frage, welcher Schritt 62, 64 zur Lösung des möglicherweise vorhandenen Sicherheitsproblems gewählt wird, kann bspw. von der Höhe abhängen, um die die Drehzahldifferenz den Referenzwert überschreitet.

In Fig. 2a ist eine Modifikation des in Fig. 2 dargestellten Verfahrens

Dabei wird in dem Verfahren 50 der Fig. 2 der Schritt 58 durch einen Schritt 58' ersetzt.

In dem Schritt 58' wird die Drehzahl n_{c} der Abtriebswelle des Stufengetriebes 22 mit einem weiteren Parameter verknüpft. Der weitere Parameter ist ausgewählt aus der Drehzahl n_{M}, der Motorwelle, der Drehzahl der wenigstens einen Antriebswelle, der Position der Kupplungen 30, 32 und der über die Kupplungen 30, 32 übertragenen Drehmomente T₁, T₂.

Diese Verknüpfung wird wiederum mit einem Referenzwert RW verglichen. In Abhängigkeit von dem Vergleich wird ein Fehlerzustand festgestellt.

Das nicht erfindungsgemäße Verfahren ist vorteilhaft dahingehend, dass die Drehzahlen der angetriebenen Räder bzw. Achsen nicht notwendig sind. Dieses Verfahren wird daher vorzugsweise dann verwendet, wenn ein Fahrzeug nicht mit Sensoren für die Raddrehzahlen bzw. Achsdrehzahlen ausgestattet ist. In diesem Fall kann die Abtriebswellendrehzahl des Getriebes als Grundwert zur Berechnung des Fehlerzustandes herangezogen werden. In automatisierten Getrieben 22 ist die Drehzahl der Abtriebswelle in der Regel vorhanden, so dass sich durch Anwendung dieses Verfahrens kein baulicher Mehraufwand ergibt.

Da die Drehzahl der Abtriebswelle des Getriebes keinen unmittelbaren Rückschluss auf den Schlupf an der angetriebenen Achse zulässt, ist die Verknüpfung mit einem weiteren Parameter bevorzugt, um einen sicheren Rückschluss auf einen Fehlerzustand zuzulassen, der zu einer Verspannung des Antriebsstranges und zu einem "irreparablen" Verlust des Kraftschlusses der angetriebenen Achse führen kann.

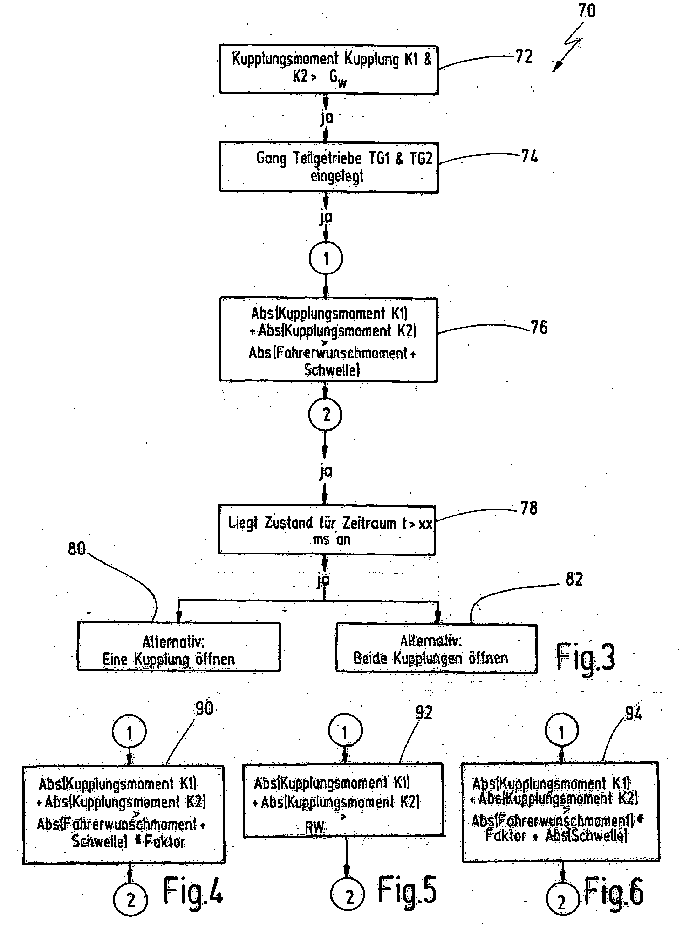

In Fig. 3 ist eine Ausführungsform des Verfahrens gemäß der vorliegenden Erfindung dargestellt und generell mit 70 bezeichnet.

Im Rahmen des Verfahrens 70 werden in Schritten 72 und 74 wiederum die Kupplungsmomente und die Teilgetriebe 34, 36 abgeprüft (identisch zu den Schritten 52 und 54 des Verfahrens 50 der Fig. 2).

In einem Schritt 76 werden zunächst die Absolutwerte bzw. Betragswerte der über die Kupplungen 30, 32 übertragenen Drehmomente berechnet. Wie oben erwähnt, wird ein Drehmoment als positiv angenommen, wenn die Drehzahl des Eingangsgliedes der jeweiligen Reibkupplung 30, 32 größer ist als die Drehzahl des Ausgangsgliedes. Falls die Drehzahl des Eingangsgliedes kleiner ist als die Drehzahl des Ausgangsgliedes, wird ein negatives Vorzeichen angenommen.

Anschließend wird im Schritt 76 geprüft, ob die Summe der so berechneten Absolutwerte größer ist als ein Referenzwert, der der Absolutwert der Summe des Fahrerwunschmomentes T_{w} und eines Schwellenwertes ist. Falls die Summe der Absolutwerte der Kupplungsmomente größer ist als das Fahrerwunschmoment T_{w} (plus einem Schwellenwert), wird angenommen, dass ein Fehlerzustand vorliegt. In diesem Fall wird im Schritt 78 abgeprüft, ob dieser Zustand für einen bestimmten Zeitraum vorliegt (ähnlich der Vorgehensweise in Schritt 60 des Verfahrens 50 der Fig. 2).

Die Schritte 80 und 82 entsprechen wiederum den Schritten 62 und 64 des Verfahrens 50 der Fig. 2, wobei alternativ eine oder beide der Reibkupplungen 30, 32 geöffnet werden, um die angenommene Fehlersituation zu entschärfen. Die Auswahl des Schrittes 80 oder 82 kann wiederum davon abhängen, wie weit die Summe der Absolutwerte der Kupplungsmomente den Absolutwert aus Fahrerwunschmoment plus Schwellenwert überschreitet.

Die Fig. 4 bis 6 zeigen jeweils alternative Ausführungsformen bzw. Modifikationen des Verfahrens 70 der Fig. 3. Darin sind die Schritte 70, 72 und 78 bis 82 jeweils identisch, lediglich der Schritt 76 wird jeweils durch einen anderen Schritt zur Erkennung eines Fehlerzustandes ersetzt.

In Fig. 4 wird in einem Schritt 90, der den Schritt 76 ersetzt, zunächst ebenfalls die Summe der Absolutwerte der Kupplungsmomente berechnet. Anschließend wird festgestellt, ob diese Summe größer ist als ein Referenzwert, der das Ergebnis einer Multiplikation aus dem Absolutwert der Summe aus dem Fahrerwunschmoment und einem Schwellenwert mit einem bestimmten Faktor ist.

Fig. 5 zeigt eine weitere Modifikation des Verfahrens 70 der Fig. 3, wobei der Schritt 76 durch einen Schritt 92 ersetzt wird, bei dem die Summe der Absolutwerte der Kupplungsmomente mit einem Referenzwert verglichen wird, der unabhängig von dem Fahrerwunschmoment ist. Der Referenzwert kann wiederum ein fester Wert sein oder auch eine Kennlinie bzw. ein Kennfeld, und kann damit von verschiedenen Fahrzeugzuständen abhängig sein.

In Fig. 6 ist eine weitere Modifikation des Verfahrens 70 gezeigt, wobei der Schritt 76 durch einen Schritt 94 ersetzt wird. In dem Schritt 94 wird die Summe der Absolutwerte der Kupplungsmomente verglichen mit einem Referenzwert, der die Summe aus (i) dem Absolutwert des Fahrerwunschmomentes T_{w} multipliziert mit einem Faktor und (ii) dem Absolutwert eines Schwellenwertes ist.

Der Faktor der Fig. 4 und 6 kann ein fester Faktor sein, kann jedoch auch ein variabler Faktor sein, der bspw. vom jeweiligen Fahrzustand abhängt. So kann dieser Faktor bspw. bei höheren Geschwindigkeiten kleiner und bei geringeren Geschwindigkeiten höher sein.

Ferner kann der Faktor beispielsweise vom Moment des Antriebsmotors (Istmoment oder Sollmoment) und/oder von einem ESP-Moment abhängen.

Der Faktor der Fig. 4 und 6 kann jeweils ein Faktor sein, der im Bereich von 0,8 bis 4, insbesondere im. Bereich von 1,8 bis 3,5 und besonders bevorzugt im Bereich von 2,3 bis 3,0 liegt.

Das Verfahren der Fig. 5 kann insbesondere dann verwendet werden (beispielsweise als alternatives Verfahren), wenn das Fahrerwunschmoment nicht zur Verfugung steht oder Null ist.

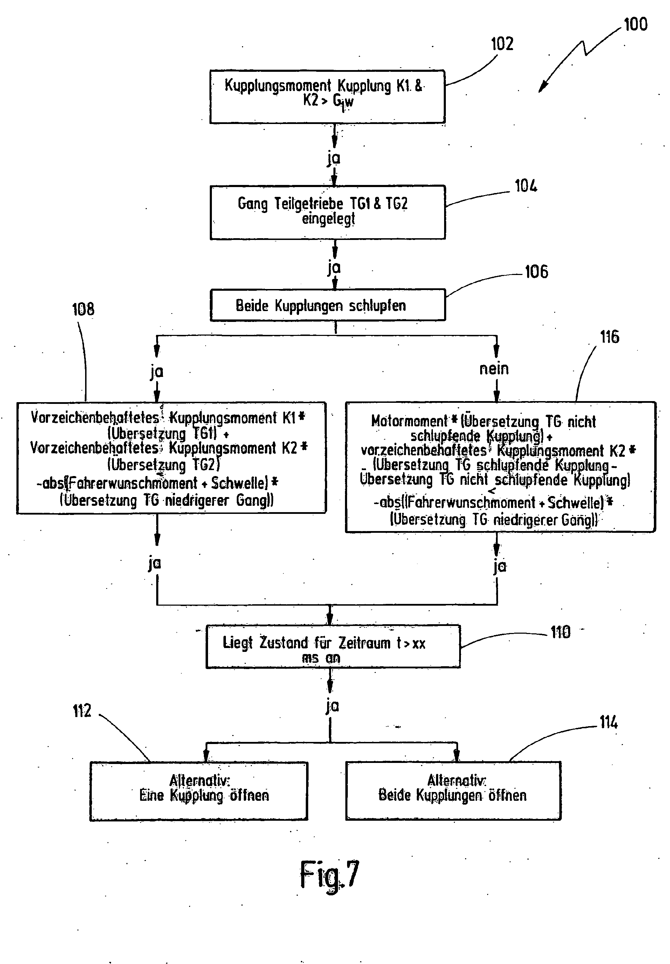

In Fig. 7 ist eine weitere Ausfilhrungsform des Verfahrens der vorliegenden Erfindung dargestellt und generell mit 100 bezeichnet.

Das Verfahren 100 umfasst zunächst die Schritte 102 und 104, die identisch sind zu den Schritten 52, 54 des Verfahrens 50 der Fig. 2.

In einem nachfolgenden Schritt 106 wird abgeprüft, ob beide Reibkupplungen 30, 32 sich in einem schlupfenden Zustand befinden, also weder vollständig geöffnet noch vollständig geschlossen sind.

Wenn dies der Fall ist, fährt das Verfahren 100 fort mit Schritt 108.

Im Schritt 108 wird zunächst die Summe gebildet aus dem vorzeichenbehafteten Kupplungsmoment der Reibkupplung 30, multipliziert mit der Übersetzung des zugeordneten Teilgetriebes 34, und dem vorzeichenbehafteten Kupplungsmoment der Reibkupplung 32, multipliziert mit der Übersetzung des zugeordneten Teilgetriebes 36. Dieser Summenwert wird anschließend verglichen mit dem negativen Absolutwert des Ergebnisses einer Multiplikation der (i) Summe aus dem Fahrerwunschmoment T_{w} und einem Schwellenwert mit (ii) der Übersetzung jenes Teilgetriebes 34, 36, in dem die niedrigere Gangstufe gewählt ist.

Sofern dies nicht der Fall ist, wird das Verfahren abgebrochen. Falls die Summe der vorzeichenbehafteten Kupplungsmomente, multipliziert mit den jeweiligen Übersetzungen, jedoch kleiner ist als der negative Absolutwert, wird in einem Schritt 110 wiederum abgefragt, ob dieser Zustand für einen bestimmten Zeitraum vorliegt (vergleichbar dem Schritt 60 des Verfahrens 50 der Fig. 2).

In einem darauffolgenden Schritt 112 oder 114 wird wiederum (vergleichbar mit den Schritten 62 und 64) entweder eine oder beide Reibkupplungen 30, 32 geöffnet, um die angenommene Fehlersituation zu bereinigen.

Falls im Schritt 106 festgestellt wird, dass nur eine der beiden Reibkupplungen 30, 32 in einem schlupfenden Zustand ist und die andere der Reibkupplungen 30, 32 geschlossen ist, wird der Schritt 116 durchgeführt.

Im Schritt 116 wird eine ähnliche Abfrage durchgeführt wie im Schritt 108. Das über die geschlossene Reibkupplung 30, 32 übertragene Drehmoment wird hierbei jedoch berechnet durch das von der Antriebseinheit 20 abgegebene Drehmoment T_{M}. Das mit dem negativen Absolutwert (wie im Schritt 108) zu vergleichende Gesamtmoment wird anschließend berechnet durch die Summe aus (i) dem Ergebnis einer Multiplikation des Antriebsmomentes (Motormomentes) T_{M} mit der Übersetzung des Teilgetriebes, das der nicht schlupfenden Reibkupplung zugeordnet ist, und des (ii) vorzeichenbehafteten Drehmomentes, das über die schlupfende Kupplung übertragen wird, multipliziert mit der Differenz der Übersetzung des Teilgetriebes der schlupfenden Reibkupplung und der Übersetzung des Teilgetriebes der nicht schlupfenden Reibkupplung. Dieses Gesamtmoment wird, wie gesagt, mit dem negativen Absolutwert aus dem Ergebnis der Multiplikation der Summe des Fahrerwunschmomentes und eines Schwellenwertes mit der Übersetzung des Teilgetriebes verglichen, in dem die niedrigere Gangstufe gewählt ist.

Sofern dies der Fall ist, wird auch hier von einem Fehlerzustand ausgegangen, wobei im Schritt 110 wiederum abgeprüft wird, ob dieser Zustand für einen längeren Zeitraum vorliegt. Die Schritte 112, 114 sind identisch wie bei der Durchführung des Schrittes 108.

Das Verfahren 100 der Fig. 7 ist vorteilhaft dahingehend, dass auf die an den angetriebenen Räder anstehenden Momente abgestellt wird, also unmittelbar auf jenen Bereich des Antriebsstranges, der überwacht werden soll (auf Verlust des Kraftschlusses).

Die Erfindung ist nicht nur in Form der oben beschriebenen Ausführungsbeispiele ausführbar. So soll bspw. im Zusammenhang mit der vorliegenden Anmeldung das Erfassen einer Drehzahl generell auch das Erfassen eines Drehzahlgradienten beinhalten.

Bei Erfassung des Drehzahlgradienten kann in Bezug auf die durchgeführten Vorgänge bei einem Gangwechsel der zeitliche Bezug noch besser in die jeweiligen Fehlererkennungsverfahren eingehen. Eine Bezugnahme auf die Erfassung einer Drehzahl soll also vorliegend auch das Erfassen eines Drehzahlgradienten beinhalten.

Ferner versteht sich, dass bspw. an Stelle des Erfassens der Drehzahl eines angetriebenen Rades äquivalent auch die Erfassung der Geschwindigkeit des Fahrzeugs herangezogen werden kann.

So soll insbesondere mit der vorliegenden Anmeldung das Erfassen der Drehzahl eines bestimmten Teils generell auch beinhalten, die Drehzahl eines drehfest hiermit verbundenen Teils zu erfassen bzw. die Geschwindigkeit eines hierdurch beeinflussten Teiles.

## Patentansprüche

1. Verfahren (70; 100) zum Erkennen eines Fehlerzustandes in einem automatisierten Kraftfahrzeuggetriebe (22), bei dem Antriebsmoment (T_{M}) über einen ersten und einen zweiten parallelen Zweig (24, 26) auf wenigstens ein angetriebenes Rad (16) übertragen werden kann, wobei in jedem Zweig (24, 26) eine Kupplung (30, 32) vorgesehen ist,
**gekennzeichnet durch** die nach folgen den schritte:
- Erfassen des über die erste Kupplung (30) übertragenen Drehmomentes (T₁);
- Erfassen des über die zweite Kupplung (32) übertragenen Drehmomentes (T₂);
- Erfassen, ob in beiden Zweigen (24, 26) ein Gang eingelegt ist;
- Feststellen eines Fehierzustandes, wenn in beiden Zweigen (24, 26) ein Gang eingelegt ist und wenn eine Summe (T₁ + T₂) der über die erste und die zweite Kupplung (30, 32) übertragenen Drehmomente (T₁ + T₂) größer ist als ein Referenzwert (RW).

2. Verfahren nach Anspruch 1, wobei der Fehlerzustand unter der zusätzlichen Bedingung (76) festgestellt wird, dass die Absolutwertsumme aus einem Absolutwert (Abs (T₁)) des über die erste Kupplung (30) übertragenen Drehmomentes (T₁) und einem Absolutwert (Abs (T₂)) des über die zweite Kupplung (32) übertragenen Drehmomentes (T₂) größer ist als ein Referenzwert.

3. Verfahren nach Anspruch 1 oder 2, wobei der Referenzwert eine Funktion des Wunschdrehmomentes (T_{w}) ist, das von einem Fahrer des Kraftfahrzeuges (10) angefordert ist.

4. Verfahren nach Anspruch 3, wobei der Referenzwert gebildet wird durch den Absolutwert der Summe aus dem Fahrerwunschmoment (T_{w}) und einem Schwellenwert.

5. Verfahren nach Anspruch 3, wobei der Referenzwert gebildet wird durch das Ergebnis (90) einer Multiplikation eines Absolutwertes einer Summe, die aus dem Fahrerwunschmoment (T_{w}) und einem Schwellenwert gebildet wird, mit einem Faktor.

6. Verfahren nach Anspruch 3, wobei der Referenzwert gebildet wird durch die Summe (94) aus (i) dem Ergebnis einer Multiplikation eines Absolutwertes des Fahrerwunschmomentes (T_{w)} mit einem Faktor und aus (ii) einem Absolutwert eines Schwellenwertes.

7. Verfahren nach Anspruch 2, wobei der Referenzwert (92) ein vom Fahrerwunschmoment (T_{w}) unabhängiger Wert ist.

8. Verfahren nach Anspruch 1, wobei der Fehlerzustand unter der zusätzlichen Bedingung (108; 116) festgestellt wird, dass ein an dem angetriebenen Rad (16) resultierendes negatives Abtriebsmoment (T_{A}) nicht größer wird als ein bestimmter Wert.

9. Verfahren nach Anspruch 1 oder 8, wobei der Fehlerzustand unter der zusätzlichen Bedingung festgestellt wird, dass beide Kupplungen (30, 32) sich in einem schlupfenden Zustand befinden.

10. Verfahren nach Anspruch 9, wobei der Fehlerzustand unter der zusätzlichen Bedingung (108) festgestellt wird, dass die Summe aus (i) einem über die erste Kupplung (30) übertragenen, vorzeichenbehafteten Drehmoment (T₁), multipliziert mit dem in dem zugeordneten Zweig (24) eingerichteten Übersetzungsverhältnis (I₁), und aus (ii) einem über die zweite Kupplung (32) übertragenen, vorzeichenbehafteten Drehmoment (T₂), multipliziert mit dem in dem zugeordneten Zweig (26) eingerichteten Übersetzungsverhältnis (I₂) kleiner ist als ein Referenzwert (RW), der der negative Absolutwert des Ergebnisses einer Multiplikation der (i) Summe aus dem Fahrerwunschmoment und einem Schwellenwert mit dem (ii) niedrigeren der Übersetzungsverhältnisse (I₁, I₂) ist.

11. Verfahren nach Anspruch 1 oder 8, wobei der Fehlerzustand unter der zusätzlichen Bedingung festgestellt wird, dass nur eine der beiden Kupplungen (32, 34) sich in einem schlupfenden Zustand befindet.

12. Verfahren nach Anspruch 11, wobei der Fehlerzustand unter der zusätzlichen Bedingung (116) festgestellt wird, dass die Summe aus (i) dem Ergebnis einer Multiplikation eines von der Antriebseinheit (20) bereitgestellten Drehmomentes (T_{M}) mit dem Übersetzungsverhältnis (I), das in dem Zweig (z.B. 26) eingerichtet ist, der der nicht schlupfenden Kupplung (z.B. 32) zugeordnet ist, und aus (ii) dem Ergebnis einer Multiplikation eines über die schlupfende Kupplung (z.B. 30) übertragenen, vorzeichenbehafteten Drehmomentes (z.B. T₁) mit der Differenz aus der Übersetzung (z.B. I₁), die in dem Zweig (z.B. 24) eingerichtet ist, der der schlupfenden Kupplung (z.B. 30) zugeordnet ist, und der Übersetzung (z.B. I₂), die in dem Zweig (z.B. 26) eingerichtet ist, der der nicht schlupfenden Kupplung (z.B. 32) zugeordnet ist, kleiner ist als ein Referenzwert (RW), der der negative Absolutwert des Ergebnisses einer Multiplikation der (i) Summe aus dem Fahrerwunschmoment (T_{w}) und einem Schwellenwert mit dem (ii) niedrigeren der Übersetzungsverhältnisse (I₁, I₂) ist.

13. Verfahren nach einem der Ansprüche 1 bis 12, wobei vor Feststellung des Fehlerzustandes wenigstens ein weiterer Zustand des Kraftfahrzeuges geprüft wird (56), um fehlerhafte Feststellungen eines Fehlerzustandes zu vermeiden.

14. Verfahren nach einem der Ansprüche 1 bis 13, wobei ein Fehlerzustand dann festgestellt wird, wenn der Fehlerzustand für eine vorbestimmte Zeitspanne größer Null vorliegt.

## Claims

1. Method (70; 100) for detecting a fault state in an automated motor vehicle gearbox (22), in which method driving torque (T_{M}) can be transmitted to at least one driven wheel (16) via a first and a second parallel branch (24, 26), wherein a clutch (30, 32) is provided in each branch (24, 26), **characterized by** the following steps:
- sensing of the torque (T₁) transmitted via the first clutch (30);
- sensing of the torque (T₂) transmitted via the second clutch (32);
- sensing whether a gear speed is engaged in both branches (24, 26); and
- detection of a fault state if a gear speed is engaged in both branches (24, 26) and if a sum (T₁ + T₂) of the torques (T₁ + T₂) transmitted via the first and second clutches (30, 32) is greater than a reference value (RW).

2. Method according to Claim 1, wherein the fault state is detected under the additional condition (76) that the absolute value sum of an absolute value (Abs (T₁)) of the torque (T₁) transmitted via the first clutch (30) and of an absolute value (Abs (T₂)) of the torque (T₂) transmitted via the second clutch (32) is greater than a reference value.

3. Method according to Claim 1 or 2, wherein the reference value is a function of the requested torque (T_{w}) which is requested by a driver of the motor vehicle (10).

4. Method according to Claim 3, wherein the reference value is formed by the absolute value of the sum of the driver's requested torque (T_{w}) and a threshold value.

5. Method according to Claim 3, wherein the reference value is formed by the result (90) of a multiplication of an absolute value of a sum, which is formed from the driver's requested torque (T_{w}) and a threshold value, by a factor.

6. Method according to Claim 3, wherein the reference value is formed by the sum (94) of (i) the result of a multiplication of an absolute value of the driver's requested torque (T_{w}) by a factor and of (ii) an absolute value of a threshold value.

7. Method according to Claim 2, wherein the reference value (92) is a value which is independent of the driver's requested torque (T_{w}).

8. Method according to Claim 1, wherein the fault state is detected under the additional condition (108; 116) that a negative output torque (T_{A}) resulting at the driven wheel (16) is not greater than a predetermined value.

9. Method according to Claim 1 or 8, wherein the fault state is detected under the additional condition that both clutches (30, 32) are in a slipping state.

10. Method according to Claim 9, wherein the fault state is detected under the additional condition (108) that the sum of (i) a signed torque (T₁) transmitted via the first clutch (30) and multiplied by the transmission ratio (I₁) which has been set up in the assigned branch (24), and of (ii) a signed torque (T₂) transmitted via the second clutch (32) and multiplied by the transmission ratio (I₂), which has been set up in the assigned branch (26), is smaller than a reference value (RW) which is the negative absolute value of the result of a multiplication of the (i) sum of the driver's requested torque and a threshold value by the (ii) lower of the transmission ratios (I₁, I₂).

11. Method according to Claim 1 or 8, wherein the fault state is detected under the additional condition that just one of the two clutches (32, 34) is in a slipping state.

12. Method according to Claim 11, wherein the fault state is detected under the additional condition (116) that the sum of (i) the result of a multiplication of a torque (T_{M}), made available by the drive unit (20), by the transmission ratio (I) which is set up in the branch (for example 26) which is assigned to the non-slipping clutch (for example 32) and of (ii) the result of a multiplication of a signed torque (for example T₁), transmitted via the slipping clutch (for example 30), by the difference between the transmission ratio (for example I₁) which is set up in the branch (for example 24) which is assigned to the slipping clutch (for example 30) and the transmission ratio (for example I₂) which is set up in the branch (for example 26) which is assigned to the non-slipping clutch (for example 32), is smaller than a reference value (RW) which is the negative absolute value of the result of a multiplication of the (i) sum of the driver's requested torque (T_{w}) and a threshold value by the (ii) lower of the transmission ratios (I₁, I₂).

13. Method according to one of Claims 1 to 12, wherein, before the fault state is detected, at least one further state of the motor vehicle is checked (56) in order to avoid incorrect detections of a fault state.

14. Method according to one of Claims 1 to 13, wherein a fault state is detected when the fault state is present for a predetermined time period of greater than zero.

## Revendications

1. Procédé (70; 100) pour détecter une situation de défaut dans une boîte de vitesses automatisée de véhicule automobile (22), dans laquelle le couple d'entraînement (T_{M}) peut être transmis par le biais d'une première et d'une deuxième branche (24, 26) parallèles sur au moins une roue motrice (16), un accouplement (30, 32) étant prévu dans chaque branche (24, 26), **caractérisé par** les étapes suivantes :
- détection du couple (T₁) transmis par le biais du premier accouplement (30) ;
- détection du couple (T₂) transmis par le biais du deuxième accouplement (32) ;
- détection de l'engagement ou non d'un rapport dans les deux branches (24, 26) ;
- constatation d'une situation de défaut lorsqu'un rapport est engagé dans les deux branches (24, 26) et lorsqu'une somme (T₁ + T₂) des couples (T₁ + T₂) transmis par le biais du premier et du deuxième accouplement (30, 32) est supérieure à une valeur de référence (RW).

2. Procédé selon la revendication 1, selon lequel la situation de défaut est constatée à la condition supplémentaire (76) que la somme des valeurs absolues d'une valeur absolue (Abs(T₁)) du couple (T₁) transmis par le biais du premier accouplement (30) et d'une valeur absolue (Abs(T₂)) du couple (T₂) transmis par le biais du deuxième accouplement (32) est supérieure à une valeur de référence.

3. Procédé selon la revendication 1 ou 2, selon lequel la valeur de référence est une fonction du couple souhaité (T_{w}) qui est demandé par un conducteur du véhicule automobile (10).

4. Procédé selon la revendication 3, selon lequel la valeur de référence est formée par la valeur absolue de la somme du couple souhaité du conducteur (T_{w}) et d'une valeur de seuil.

5. Procédé selon la revendication 3, selon lequel la valeur de référence est formée par le résultat (90) d'une multiplication d'une valeur absolue d'une somme, laquelle est formée par le couple souhaité du conducteur (T_{w}) et une valeur de seuil, par un facteur.

6. Procédé selon la revendication 3, selon lequel la valeur de référence est formée par la somme (94) de (i) le résultat d'une multiplication d'une valeur absolue du couple souhaité du conducteur (T_{w}) par un facteur et (ii) une valeur absolue d'une valeur de seuil.

7. Procédé selon la revendication 2, selon lequel la valeur de référence (92) est une valeur indépendante du couple souhaité du conducteur (T_{w}).

8. Procédé selon la revendication 1, selon lequel la situation de défaut est constatée à la condition supplémentaire (108 ; 116) qu'un couple de réduction négatif (T_{A}) résultant au niveau de la roue motrice (16) ne devienne pas supérieur à une valeur donnée.

9. Procédé selon la revendication 1 ou 8, selon lequel la situation de défaut est constatée à la condition supplémentaire que les deux accouplements (30, 32) se trouvent dans une situation de patinage.

10. Procédé selon la revendication 9, selon lequel la situation de défaut est constatée à la condition supplémentaire (108) que la somme de (i) un couple (T₁) muni d'un signe, transmis par le biais du premier accouplement (30), multiplié par le rapport de démultiplication (I₁) établi dans la branche (24) associée, et (ii) un couple (T₂) muni d'un signe, transmis par le biais du deuxième accouplement (32), multiplié par le rapport de démultiplication (I₂) établi dans la branche (26) associée, est inférieure à une valeur de référence (RW), laquelle est la valeur absolue négative du résultat d'une multiplication de (i) la somme du couple souhaité du conducteur et d'une valeur de seuil par (ii) le plus petit des rapports de démultiplication (I₁ I₂).

11. Procédé selon la revendication 1 ou 8, selon lequel la situation de défaut est constatée à la condition supplémentaire qu'un seul des deux accouplements (30, 32) se trouve dans une situation de patinage.

12. Procédé selon la revendication 11, selon lequel la situation de défaut est constatée à la condition supplémentaire (116) que la somme (i) du résultat d'une multiplication d'un couple (T_{M}) délivré par l'unité d'entraînement (20) par le rapport de démultiplication (I) établi dans la branche (par ex. 26) qui n'est pas associée à l'accouplement qui patine (par ex. 32) et (ii) du résultat d'une multiplication d'un couple muni d'un signe (par ex T₁), transmis par le biais de l'accouplement qui patine (par ex. 30), par la différence entre la démultiplication (par ex. I₁) qui est établie dans la branche (par ex. 24) qui est associée à l'accouplement qui patine (par ex. 30) et la démultiplication (par ex. I₂) qui est établie dans la branche (par ex. 26) qui est associée à l'accouplement qui ne patine pas (par ex. 32), est inférieure à une valeur de référence (RW), laquelle est la valeur absolue négative du résultat d'une multiplication de (i) la somme du couple souhaité du conducteur (T_{w}) et d'une valeur de seuil par (ii) le plus petit des rapports de démultiplication (I₁ I₂).

13. Procédé selon l'une des revendications 1 à 12, selon lequel au moins une situation supplémentaire du véhicule automobile est contrôlée (56) avant la constatation de la situation de défaut afin d'éviter des constatations erronées d'une situation de défaut.

14. Procédé selon l'une des revendications 1 à 13, selon lequel une situation de défaut est constatée lorsque la situation de défaut est présente pendant un intervalle de temps prédéfini supérieur à zéro.
